# EUROPÄISCHE PATENTSCHRIFT

(11) **EP 0 392 295 B1**
(45) Veröffentlichungstag und Bekanntmachung des Hinweises auf die Patenterteilung: **04.08.1993**
(21) Anmeldenummer: 90106196.0
(22) Anmeldetag: 30.03.1990
(51) Int. Cl.: G01N 27/90

(54) **Wirbelstromprüfsonde zur Prüfung von Rohren eines Dampferzeugers**
Eddy current probe for testing tubes in a steam generator
Sonde à courants de Foucault pour le contrôle de tuyaux dans un générateur de vapeur

(30) Priorität: 13.04.1989 DE 8904672 U; 25.09.1989 DE 8911407 U
(43) Veröffentlichungstag der Anmeldung: 17.10.1990
(73) Patentinhaber: SIEMENS AKTIENGESELLSCHAFT, 80333 München (DE)
(72) Erfinder: Adams, Helmar, D-8520 Erlangen (DE); Bauer, Rainer, D-8522 Herzogenaurach (DE)

(56) Entgegenhaltungen:
- EP-A- 0 008 710
- EP-A- 0 023 163
- EP-A- 0 114 139
- FR-A- 2 320 542
- FR-A- 2 406 198

## Beschreibung

Die Erfindung bezieht sich auf eine Wirbelstromprüfsonde zur Prüfung von Rohren eines Dampferzeugers, bei der an einem mit einer zentralen axialen Aussparung versehenen zylinderförmigen Grundkörper ein ringförmiger Spulenträger mit mindestens zwei elektrischen Spulen angeordnet ist und Wicklungsdrähte der Spulen mit den Enden von in die zentrale Ausaparung eingeführten elektrischen Leitungen durch erste Verbindungsstellen verbunden sind, welche in der zentralen Aussparung des zylinderförmigen Grundkörpers angeordnet sind (siehe FR-A-2320542).

Aus der europäischen Patentanmeldung 0 008 710 ist eine derartige Wirbelstromsonde zur Prüfung gerader Rohre bekannt. Sie besitzt einen zylindrischen Spulenträger aus Polyoxymethylen, der auf einem ebenfalls aus Polyoxymethylen bestehenden Grundkörper angeordnet ist. Der Spulenträger ist dabei zwischen zwei geschlitzten Rohrstücken eingespannt, die auf den Grundkörper aufgeschraubt sind und einen gleichmäßigen Abstand der Spulen von der Rohrinnenwand ermöglichen. Die Wicklungsdrähte der Spulen sind in der zentralen Aussparung des Grundkörpers mit den Enden von Koaxialkabeln verbunden, welche außerhalb des Grundkörpers in einem Polyethylenschlauch gefaßt sind. Dieser Schlauch hat einen Stecker, welcher eine mechanische und elektrische Kupplung mit einem Schubschlauch ermöglicht. Durch den Schubschlauch führen die Koaxialleiter zu einer Speise- und Meßvorrichtung. Mittels einer Schubvorrichtung wird der Schubschlauch mit dem Sondenkopf in das zu prüfende Rohr des Dampferzeugers eingeschoben. An der Führungsspitze trägt der Grundkörper eine Kappe, welche die in der zentralen Aussparung angeordneten Leitungsverbindungen abdeckt. Diese Sonde ist nicht für den Einsatz in engen Rohrbögen geeignet.

Aus der europäischen Patentanmeldung 0 023 163 ist ferner eine Wirbelstromsonde zur Prüfung von Rohren bekannt, bei der zwei Spulen in Ringnuten eines Meßkopfes angeordnet sind. An dem einen Ende des Meßkopfes ist über eine Drahtspirale eine Sondenspitze angeordnet, während an der anderen Seite über eine Drahtspirale ein Anschlußteil mit einem elektrischen Stecker angebracht ist. Die Wicklungsdrähte der Spulen und der Speisekabel sind durch eine zentrale Aussparung des Meßkopfes hindurch zur Sondenspitze geführt. Die Enden der Speisekabel und der Wicklungsdrähte sind innerhalb der Spiralfeder miteinander verbunden und mit einer biegsamen Isolierumhüllung versehen. An den Drahtspiralen sind kugelähnliche Zentrierkörper angeordnet. In einem dieser Zentrierkörper befindet sich ein Führungskörper für die wellenförmig innerhalb der Drahtspirale angeordneten elektrischen Speisekabel. Bei dieser bekannten Ausführung sind die Leitungsverbindungen mit den Wicklungsdrähten nicht zugentlastet und liegen in einer Biegezone. Durch die Anordnung eines Steckers wird die Sonde darüber hinaus steif, so daß man nicht durch enge Rohrbögen fahren kann.

Die bekannten Sonden sind ferner bei der Prüfung von stark verschmutzten Rohren schon nach relativ kurzen Einsatzzeiten nicht mehr funktionsfähig.

Der Erfindung liegt die Aufgabe zugrunde, eine Sonde anzugeben, mit der unter Erzielung eines einfachen Aufbaus auch beim Einsatz in stark verschmutzten Rohren mit Bögen höhere Standzeiten als bisher erzielt werden können.

Diese Aufgabe wird bei einer Wirbelstromprüfsonde der eingangs genannten Art erfindungsgemäß dadurch gelöst, daß die elektrischen Leitungen als Litzendrähte ausgebildet sind, daß die ersten Verbindungsstellen und die Enden der mit einem Isoliermantel versehenen Litzendrähte mit dem zylindrischen Grundkörper durch Außgießen mindestens eines Teils der zentralen Aussparung mit Kunststoffgußmasse vergossen sind, daß der ringförmige Spulenträger aus einem Keramikwerkstoff gebildet ist und die Oberfläche der Spulen mit einer abriebfesten Schicht versehen ist, und daß am Grundkörper eine die Litzendrähte aufnehmende Drahtwendel oder ein Schubschlauch befestigt ist.

Auf diese Weise können bei einer Vereinfachung der Herstellung des Prüfkopfes und bei einer Verlängerung der Lebensdauer der Sonde auch mehrere hinhereinanderliegende Rohrbögen durchfahren werden, wobei insbesondere die Abriebfestigkeit sowie die Korrosionsbeständigkeit der Spulen und die Bruchsicherheit der Verbindungsstellen der elektrischen Leitungen in der Sonde erhöht werden.

Es ist günstig, wenn die Litzendrähte eine vorgegebene Länge haben und die Form von Spiralen oder Wendeln aufweisen, wobei sie über zweite Verbindungsstellen mit Koaxialleitern verbunden sind, die durch eine an dem Grundkörper angeordnete Drahtspirale und einen mit dieser verbundenen Schubschlauch nach außen zu einer Speise- und Meßvorrichtung geführt sind, und die Koaxialleiter nahe den Verbindungsstellen durch eine Klemmhülse fixiert sind, und die Klemmhülse in dem Schubschlauch unverschiebbar gehaltert ist. Dadurch wird die Lebensdauer der Sonde zusätzlich verlängert, da Leitungsbrüche in der elektrischen Verbindung mit den Koaxialleitern vermieden werden.

Andere vorteilhafte Ausgestaltungen der Erfindung sind in weiteren Unteransprüchen angegeben.

In der Zeichnung sind Ausführungsbeispiele der Erfindung dargestellt. Darin zeigt:
- FIG 1: einen Längsschnitt einer Sonde zur Prüfung von Heizrohren eines Dampferzeugers,
- FIG 2: eine andere Sonde und

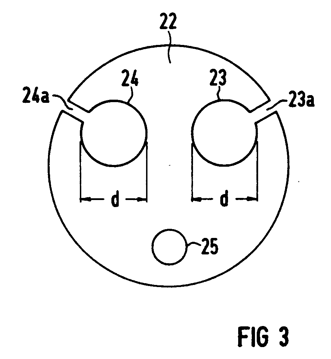

- FIG 3: eine Einzelheit zu Figur 2.

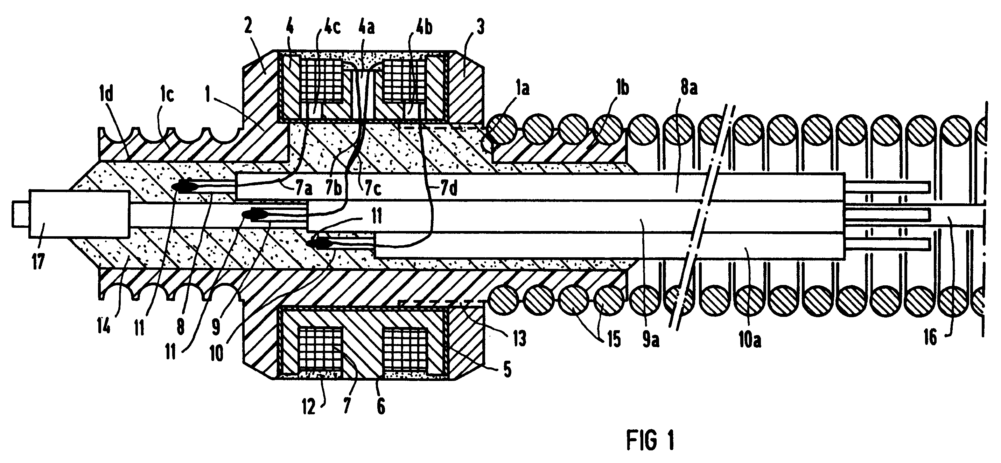

Die in Figur 1 in vergrößertem Maßstab gezeigte Sonde hat einen zylinderförmigen Grundkörper 1 aus Kunststoff, insbesondere Hostaform, an dem zwei Flansche 2, 3 angeordnet sind. Zwischen diesen zwei Flanschen 2, 3 ist ein ringförmiger Spulenträger 4 aus einem Keramikwerkstoff in einer Kunststoffmasse 5 eingebettet. Dieser Spulenträger 4 hat radiale Nuten 6 für die Unterbringung von mindestens zwei elektrischen Spulen 7. In dem Spulenträger 4 sind radiale Aussparungen 4a, 4b, 4c angeordnet, die in eine radiale Aussparung 1a (Schlitz) im Grundkörper 1 münden. Durch diese Aussparungen 4a, 4b, 4c und 1a sind die Anschlußdrähte 7a, 7b, 7c, 7d der Spulen 7 in eine zentrale axiale Aussparung 1d des zylinderförmigen Grundkörpers 1 geführt und dort mit Enden von Litzendrähten 8, 9, 10 durch erste Verbindungsstellen 11 verbunden (z.B. durch Löten). Die Litzendrähte 8, 9, 10 haben einen Isoliermantel 8a bzw. 9a bzw. 10a und sind in die zentrale axiale Aussparung 1d des zylinderförmigen Grundkörpers 1 eingeführt. Dabei sind die Verbindungsstellen 11 (Lötstellen) und die Enden der mit den Isoliermänteln 8a, 9a, 10a versehenen Litzendrähte 8, 9, 10 mit dem zylindrischen Grundkörper 1 durch Ausgießen zumindest eines Teiles der zentralen Aussparung mit Kunststoffgußmasse 14 vergossen.

Zumindest an der der Führungsspitze entgegengesetzten Seite hat der Grundkörper 1 einen Ansatz 1b, der zum Befestigen einer Drahtwendel 15 bzw. eines Schubschlauches dient. Die mit einem Isoliermantel versehenen Litzendrähte 8, 9, 10 sind innerhalb der Drahtwendel 15 bzw. des Schubschlauches angeordnet und werden mit einer in der Zeichnung nicht dargestellten Speise- und Meßvorrichtung verbunden. Ein Ansatz 1c kann auch an der Stirnseite des Grundkörpers 1 angeordnet sein, wenn dort ein Anschluß für eine Drahtwendel oder einen Schubschlauch gewünscht wird.

Die Außenfläche des ringförmigen Spulenkörpers 4 oder zumindest die Oberfläche der Spulen ist mit einer abriebfesten Schicht 12, z.B. Aluminiumoxyd, von mindestens etwa 0,2 mm Dicke versehen.

Es ist günstig, als keramischen Werkstoff für den Spulenkörper 1 Steatit, insbesondere Steatit 221, zu verwenden.

Zweckmäßigerweise bildet der Flansch 2 mit dem zylindrischen Grundkörper 1 einen einteiligen Körper. Der zweite Flansch 3 ist als Scheibe ausgebildet und auf ein Gewinde 13 des Grundkörpers 1 aufgeschraubt. Diese Ausbildung ermöglicht ein einfaches Anbringen des mit den Spulen 7 versehenen Spulenträgers 4 auf dem Grundkörper 1.

Die Wicklungsdrähte 7a, 7b, 7c, 7d, die aus den Aussparungen 4a, 4b, 4c herausgeführt sind, werden beim Aufschieben des Spulenträgers 4 durch die als Schlitz ausgebildete Aussparung 1a, die in den Ansatz 1b hineinragt, in die axiale Aussparung 1d eingeführt. Zum Herstellen der ersten Verbindungsstellen 11 werden die Enden der Litzendrähte 8, 9, 10 und der Anschlußdrähte 7a, 7b, 7c, 7d an der Stirnseite des Grundkörpers 1 herausgeführt, so daß sie in einfacher Weise verbunden werden können. Dann werden die Litzendrähte 8, 9, 10 mit den Verbindungsstellen 11 in die Aussparung 1d zurückgezogen und ausgegossen. Dadurch sind die Litzendrähte in dem Grundkörper 1 gehaltert und die Verbindungsstellen 11 vor Bruch und Korrosion sicher geschützt.

Es ist vorteilhaft, in der Drahtwendel 15 bzw. in dem Schubschlauch zusätzlich zu den isolierten Litzendrähten 8, 9, 10 ein Zugsseil 16 mit Bund 17 anzuordnen, dessen eines Ende durch die zentrale axiale Aussparung des zylinderförmigen Grundkörpers 1 hindurchgeführt und mit diesem durch die Kunststoffgußmasse 14 vergossen ist. Dabei kann ein Teil des Bundes aus der Stirnseite des Grundkörpers 1 unter Bildung einer Führungsspitze aus der Kunststoffgußmasse 14 herausragen. Der Bund 17 ist zweckmäßigerweise durch ein aufgepreßtes Rohrstück gebildet. Das Zugseil 16 ermöglicht bei einem Bruch der Drahtwendel 15 das Bergen des Sondenkopfes.

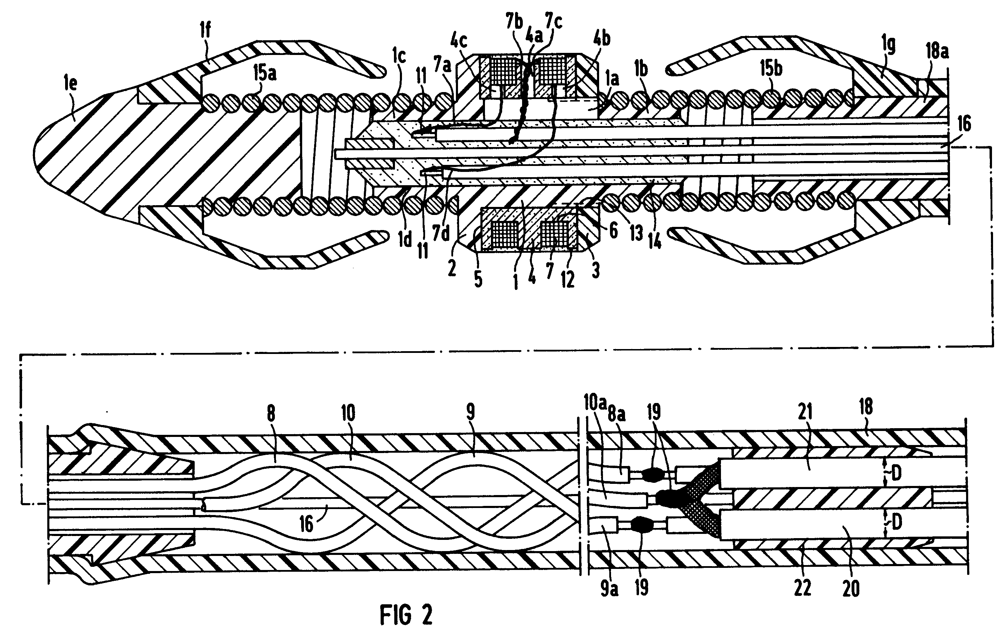

In Figur 2 hat der Grundkörper 1 an der Führungsspitze und an der entgegengesetzten Seite jeweils einen Ansatz 1b und 1c, der zum Befestigen je einer Drahtwendel 15a, 15b aus Federdraht dient. An der Stirnseite der Sonde ist an der Drahtwendel 15a eine Führungsspitze 1e mit einem Zentrierkörper 1f angeordnet. Die an der anderen Seite des Grundkörpers angebrachte Drahtwendel 15b ist mit einem Zentrierkörper 1g und einem Anschlußstück 18a für den Schubschlauch 18 versehen.

Die mit einem Isoliermantel versehenen Litzendrähte 8, 9, 10 vorgegebener kurzer Länge sind innerhalb der Drahtwendel 15b bzw. des Schubschlauches 18 untergebracht und sind im Schubschlauch in Form von Spiralen oder Wendein angeordnet und über zweite Verbindungsstellen 19 mit Koaxialleitern 20, 21 verbunden. Dabei ist der Litzendraht 10 mit den zusammengeführten Schirmen der beiden Koaxialleiter 20, 21 verbunden. Diese Koaxialleiter sind durch den Schubschlauch 18 nach außen zu einer in der Zeichnung nicht dargestellten Speise- und Meßvorrichtung geführt. Die Koaxialleiter 20, 21 sind nahe den zweiten Verbindungsstellen 19 durch eine Klemmhülse 22 fixiert. Die Klemmhülse 22 ist in dem Schubschlauch 18 unverschiebbar gehaltert. Sie ist vorteilhafterweise durch einen zylindrischen Körper mit Längsbohrungen 23, 24, 25 für die einzelnen Koaxialleiter 20, 21 gebildet. Der Durchmesser d der Längsbohrungen 23, 24 ist bei noch nicht eingeführten Koaxialleitern jeweils kleiner als der Außendurchmesser D des zugeordneten Koaxialleiters. An den Längsbohrungen 23, 24 für die Koaxialleiter ist ein radialer Schlitz 23a, 24a vorgesehen, so daß sich die Bohrungen elastisch aufweiten können, wenn die Koaxialleiter eingeführt werden. Dadurch wird ein festsitzender Klemmsitz für die Koaxialleiter erzielt. Die Klemmhülse 22 selbst ist in dem Schubschlauch 18 unverschieblich gehalten (Figur 1). Dabei ist es besonders vorteilhaft, wenn die Halterung durch thermische Verformung des Schubschlauches gebildet ist.

In der Drahtwendel 15 und in dem Schubschlauch 18 ist zusätzlich zu den isolierten Litzendrähten 8, 9, 10 ein Zugsseil 16 angeordnet, dessen eines Ende durch die Bohrung 25 der Klemmhülse 22 und durch die zentrale axiale Aussparung 1d des zylinderförmigen Grundkörpers 1 hindurchgeführt ist.

## Patentansprüche

1. Wirbelstromprüfsonde zur Prüfung von Rohren eines Dampferzeugers, bei der an einem mit einer zentralen axialen Aussparung (1d) versehenen zylinderförmigen Grundkörper (1) ein ringförmiger Spulenträger (4) mit mindestens zwei elektrischen Spulen (7) angeordnet ist und Wicklungsdrähte (7a - 7d) der Spulen mit den Enden von in die zentrale Aussparung eingeführten elektrischen Leitungen durch erste Verbindungsstellen (11) verbunden sind, welche in der zentralen axialen Aussparung (1d) des zylinderförmigen Grundkörpers (1) angeordnet sind,
**dadurch gekennzeichnet,**
daß die elektrischen Leitungen als Litzendrähte (8, 9, 10) ausgebildet sind,
daß die ersten Verbindungsstellen (11) und die Enden der mit einem Isoliermantel (8a, 9a, 10a) versehenen Litzendrähte (8) mit dem zylindrischen Grundkörper (1) durch Ausgießen mindestens eines Teils der zentralen Aussparung (1d) mit Kunststoffgußmasse (14) vergossen sind,
daß die litzendrähte (8, 9, 10) eine vorgegebene länge haben und über zweite Verbindungsstellen (19) mit koaxialleitern (20, 21) verbunden sind,
daß der ringförmige Spulenträger (4) aus einem Keramikwerkstoff gebildet ist, und die Oberfläche der Spulen (7) mit einer abriebfesten Schicht (12) versehen ist, und
daß am Grundkörper (1) eine Drahtwendel (15) oder ein Schubschlauch (18) befestigt ist, die jeweils die Litzendrähte (8, 9, 10) und die koaxialleiter aufnehmen.

2. Wirbelstromprüfsonde nach Anspruch 1, bei der als keramischer Werkstoff für den Spulenkörper (1) Steatit verwendet ist.

3. Wirbelstromprüfsonde nach Anspruch 1 oder 2, bei der ein Flansch (2) mit dem zylindrischen Grundkörper (1) einen einteiligen Körper bildet und der zweite Flansch (3) als Scheibe ausgebildet auf ein Gewinde (13) des Grundkörpers (1) aufgeschraubt ist.

4. Wirbelstromprüfsonde nach Anspruch 1,
**dadurch gekennzeichnet,** daß in der am Grundkörper (1) befestigbaren Drahtwendel (15) bzw. in dem Schubschlauch zusätzlich zu den isolierten Litzendrähten (8, 9, 10) ein Zugseil (16) mit Bund (17) angeordnet ist, dessen eines Ende durch die zentrale Aussparung (1d) des zylindrischen Grundkörpers (1) hindurchgeführt und mit diesem durch die Kunststoffmasse (14) vergossen ist.

5. Wirbelstromprüfsonde nach Anspruch 1,
**dadurch gekennzeichnet,** daß der Spulenträger (4) zwischen den zwei Flanschen (2, 3) in einer Kunststoffmasse (5) eingebettet ist.

6. Wirbelstromprüfsonde nach einem der vorhergehenden Ansprüche,
**dadurch gekennzeichnet,** daß die Litzendrähte (8, 9, 10) die Form von Spiralen oder Wendeln aufweisen, daß die Koaxialleiter (20, 21) durch eine an dem Grundkörper (1) angeordnete Drahtspirale (15b) und einen mit dieser verbundenen Schubschlauch (18) nach außen zu einer Speise- und Meßvorrichtung geführt sind, und die Koaxialleiter (20, 21) nahe den Verbindungsstellen (19) durch eine Klemmhülse (22) fixiert sind, und daß die Klemmhülse (22) in dem Schubschlauch (18) unverschiebbar gehaltert ist.

7. Wirbelstromprüfsonde nach Anspruch 6, bei der die Klemmhülse (22) durch einen zylindrischen Körper mit Längsbohrungen (23, 24) für die Koaxialleiter (20, 21) gebildet ist, die Längsbohrungen mit einem radialen Schlitz (23a, 24a) versehen sind und der Durchmesser der Längsbohrungen (23, 24) bei nicht eingeführten Koaxialleitern (20, 21) jeweils kleiner ist als der Außendurchmesser der Koaxialleiter.

8. Wirbelstromprüfsonde nach einem der vorhergehenden Ansprüche, bei der die unverschiebbare Halterung der Klemmhülse (22) in dem Schubschlauch (18) durch thermische Verformung des Schubschlauches (18) gebildet ist.

## Claims

1. Eddy current probe for testing pipes of a steam generator, in which probe there is arranged, on a cylindrical base body (1) provided with a central axial recess (1d), an annular coil carrier (4) having at least two electrical coils (7), winding wires (7a - 7d) of the coils being connected by means of first connection points (11) to the ends of electrical leads inserted in the central recess, which connection points (11) are arranged in the central axial recess (1d) of the cylindrical base body (1), characterised in that the electrical leads are formed as stranded wires (8, 9, 10), in that the first connection points (11) and the ends of the stranded wires (8) provided with an insulating casing (8a, 9a, 10a) are encapsulated with the cylindrical base body (1) by the filling up of at least part of the central recess (1d) with a pourable plastics compound (14), in that the stranded wires (8, 9, 10) have a preselected length and are connected by way of second connection points (19) to coaxial conductors (20, 21), in that the annular coil carrier (4) is formed of a ceramic material and the surface of the coils (7) is provided with an abrasion-resistant layer (12), and in that there is secured to the base body (1) a helical wire (15) or a push tube (18) which accommodates the respective stranded wires (8, 9, 10) and coaxial conductors.

2. Eddy current probe according to claim 1, in which steatite is used as the ceramic material for the coil bodies (4).

3. Eddy current probe according to claim 1 or 2, in which a flange (2) forms a one-piece body with the cylindrical base body (1) and the second flange (3), formed as a disc, is screwed on to a thread (13) of the base body (1).

4. Eddy current probe according to claim 1, characterised in that there is arranged within the helical wire (15), which can be secured to the base body (1), or within the push tube, in addition to the insulated stranded wires (8, 9, 10), a traction cable (16) having a collar (17), one end of which is passed through the central recess (1d) of the cylindrical base body (1) and is encapsulated with the base body (1) by means of the plastics compound (14).

5. Eddy current probe according to claim 1, characterised in that the coil carrier (4) is embedded between the two flanges (2, 3) in a plastics compound (5).

6. Eddy current probe according to one of the preceding claims, characterised in that the stranded wires (8, 9, 10) are spirally or helically shaped, in that the coaxial conductors (20, 21) are led out, by means of a spiral wire (15b) arranged on the base body (1) and a push tube (18) connected to the said spiral wire, to a supply and measurement device, and the coaxial conductors (20, 21) are fixed in position near the connection points (19) by means of a clamping sleeve (22), and in that the clamping sleeve (22) is held within the push tube (18) so that it cannot be displaced.

7. Eddy current probe according to claim 6, in which the clamping sleeve (22) is formed by a cylindrical body having longitudinal holes (23, 24) for the coaxial conductors (20, 21), the longitudinal holes are provided with a radial slot (23a, 24a) and the diameter of the longitudinal holes (23, 24), when the coaxial conductors (20, 21) are not inserted, is respectively less than the outer diameter of the coaxial conductors.

8. Eddy current probe according to one of the preceding claims, in which the non-displaceable means for holding the clamping sleeve (22) in the push tube (18) is formed by thermal deformation of the push tube (18).

## Revendications

1. Sonde à courants de Foucault pour le contrôle de tubes d'un générateur de vapeur, dans laquelle un porte-bobines annulaire (4) comportant au moins deux bobines électriques (7) est disposé sur le corps de base cylindrique (1) pourvu d'un passage axial central (1d), et des fils d'enroulement (7a-7d) des bobines sont raccordés aux extrémités de conducteurs électriques introduits dans le passage central, par des premiers points de liaison (11), qui sont disposés dans le passage axial central (1d) du corps de base cylindrique (1),
caractérisée par le fait
que les conducteurs électriques sont réalisés sous la forme de fils torsadés (9,10),
que les premiers points de liaison (11) et l'extrémité des fils torsadés (8) pourvus d'une gaine isolante (8a,9a,10a), sont enrobés, ainsi que le corps de base cylindrique (1), par coulée d'une masse de scellement en matière plastique, dans au moins une partie du passage central (1d),
que les fils torsadés (8,9,10) possèdent une longueur prédéterminée et sont raccordés par l'intermédiaire de seconds points de liaison (19) à des conducteurs coaxiaux (20,21),
que le porte-bobines annulaire (4) est réalisé en un matériau céramique et que la surface des bobines (7) est revêtue d'une couche (12) résistante à l'usure par frottement, et
que sur le corps de base (1) est fixé un filament hélicoïdal (15) ou un tuyau enfichable (18), qui logent respectivement les fils torsadés (8,9,10) et les conducteurs coaxiaux.

2. Sonde à courants de Foucault suivant la revendication 1, dans laquelle on utilise de la stéatite comme matériau céramique pour le corps porte-bobines (1).

3. Sonde à courants de Foucault suivant la revendication 1 ou 2, dans laquelle une bride (2) forme, avec le corps de base cylindrique (1), un corps monobloc et que la seconde bride (3) est vissée, sous la forme d'une rondelle, sur un filetage (13) du corps de base (1).

4. Sonde à courants de Foucault suivant la revendication 1, caractérisée par le fait que dans le filament hélicoïdal (15) pouvant être fixé sur le corps de base (1) ou dans le tuyau enfichable, est disposé, en plus des fils torsadés isolés (8,9,10), un câble de traction (16) comportant un collier (17), dont une extrémité traverse le passage central (1d) du corps de base cylindrique (1) et est enrobé, ainsi que ce dernier, par la masse de matière plastique (14).

5. Sonde à courants de Foucault suivant la revendication 1, caractérisée par le fait que le porte-bobines (4) est inséré, entre les deux brides (2,3), dans une masse de matière plastique (5).

6. Sonde à courants de Foucault suivant l'une des revendications précédentes, caractérisée par le fait que les fils torsadés (8,9,10) possèdent la forme de spirales ou d'hélices, que les conducteurs coaxiaux (20,21) traversent un fil hélicoïdal (15b) disposé sur le corps de base (1) et un tuyau enfichable (18) raccordé à ce fil hélicoïdal pour ressortir à l'extérieur en direction d'un dispositif d'alimentation et de mesure, et que les conducteurs coaxiaux (20,21) sont fixés, à proximité des points de liaison (19), par une douille de serrage (22), et que la douille de serrage (22) est maintenue en position fixe dans le tuyau enfichable (18).

7. Sonde à courants de Foucault suivant la revendication 6, dans laquelle la douille de serrage (22) est formée par un corps cylindrique comportant des perçages longitudinaux (23,24) pour les conducteurs coaxiaux (20,21), les perçages longitudinaux comportent une fente radiale (23a, 24a), et le diamètre des perçages longitudinaux (23,24), lorsque les conducteurs coaxiaux (20, 21) ne sont pas introduits, est inférieur respectivement au diamètre extérieur des conducteurs coaxiaux.

8. Sonde à courants de Foucault suivant l'une des revendications précédentes, dans laquelle la fixation immobile de la douille de serrage (22) dans le tuyau enfichable (18) est obtenue par déformation thermique du tuyau emmanchable (18).
